# EUROPEAN PATENT APPLICATION

(11) **EP 0 787 999 A2**
(43) Date of publication of application: **06.08.1997**
(21) Application number: 97300473.2
(22) Date of filing: 24.01.1997
(51) Int. Cl.: G01S 13/87

(54) **Device and method of locating electronic price labels in transaction establishments**

(30) Priority: 30.01.1996 US 593983
(71) Applicant: NCR INTERNATIONAL INC., Dayton, Ohio 45479 (US)
(72) Inventor: Goodwin, John C, III, Suwanee, Georgia 30174 (US); Zimmerman, Terry L., Lawrenceville, Georgia 30243 (US)
(74) Representative: Irish, Vivien Elizabeth

(57) **Abstract**

A portable electronic price label locator (24) which uses signal strengths associated with signals from the electronic price label (18 or 19). The locator includes a keypad 54 to input information identifying the label to be located, and three spaced RF sensors (70) to receive signals from the label. From the relative strengths of the received signals processing circuitry (60) determines the direction to the electronic price label, which is displayed on a display (62) as an arrow pointing right or left.

## Description

The present invention relates to electronic price label (EPL) systems used in transaction establishments, and more specifically to a device and method for locating EPLs in a transaction establishment.

EPL systems typically include a plurality of EPLs, one for each merchandise item in a store. EPLs typically_display the price of corresponding merchandise items on store shelves and are typically attached to a rail along the leading edge of the shelves. A store may contain thousands of EPLs to display the prices of the merchandise items. The EPLs are coupled to a central server from where information about the EPLs is typically maintained in an EPL data file. Price information displayed by the EPLs is obtained from the PLU file.

EPLs today may be wired or wireless. Wireless EPLs may employ infrared or radio frequency transmitters to transmit acknowledgment signals acknowledging receipt of messages and to relay acknowledgment signals from other EPLs to receiving devices coupled to a main EPL computer. An EPL only sends an acknowledgment if the message is addressed to it.

Over time, EPLs may be displaced from their mounting brackets. A customer or store employee may intentionally or unintentionally remove an EPL. In any case, the store must locate and reinstall the displaced EPLs, or determine that they are not in the store and replace them.

It is an object of the present invention to provide a device and method for locating EPLs in a transaction establishment.

According to the present invention there is provided a portable apparatus for locating an electronic price label characterized by:
a receiver for receiving signals from the electronic price label;
signal strength determining circuitry coupled to the receiver for measuring the signal strengths associated with the received signals;
processing circuitry coupled to the signal strength determining circuitry for determining from the signal strengths levels the direction to the electronic price label from the portable apparatus; and
a display coupled to the processing circuitry for displaying the direction.

Also according to the invention there is provided a method locating an electronic price label characterized by the steps of:
recording in a portable apparatus identification information to identify said label;
receiving signals from said label;
determining the relative strengths of the received signals;
determining from said relative strengths the direction of said label from the portable apparatus; and
displaying said direction.

The invention will now be described by way of example only with reference to the accompanying drawings, in which:
Fig. 1 is a block diagram of an EPL system;
Fig. 2 is a block diagram of an EPL;
Fig. 3 is a block diagram of a portable EPL locator;
Fig. 4 is a view of a first embodiment of the portable EPL locator;
Fig. 5 is a view of a second embodiment of the portable EPL locator;
Fig. 6 is a flow diagram illustrating the operation of EPL control software in conjunction with the EPL locator;
Fig. 7 is a flow diagram illustrating the method of locating the wireless EPLs by EPL locator software;
Figs. 8 and 9 are maps of a transaction establishment, showing an EPL to be located in different positions.
Fig. 10 is a sample report generated by the EPL locator software.

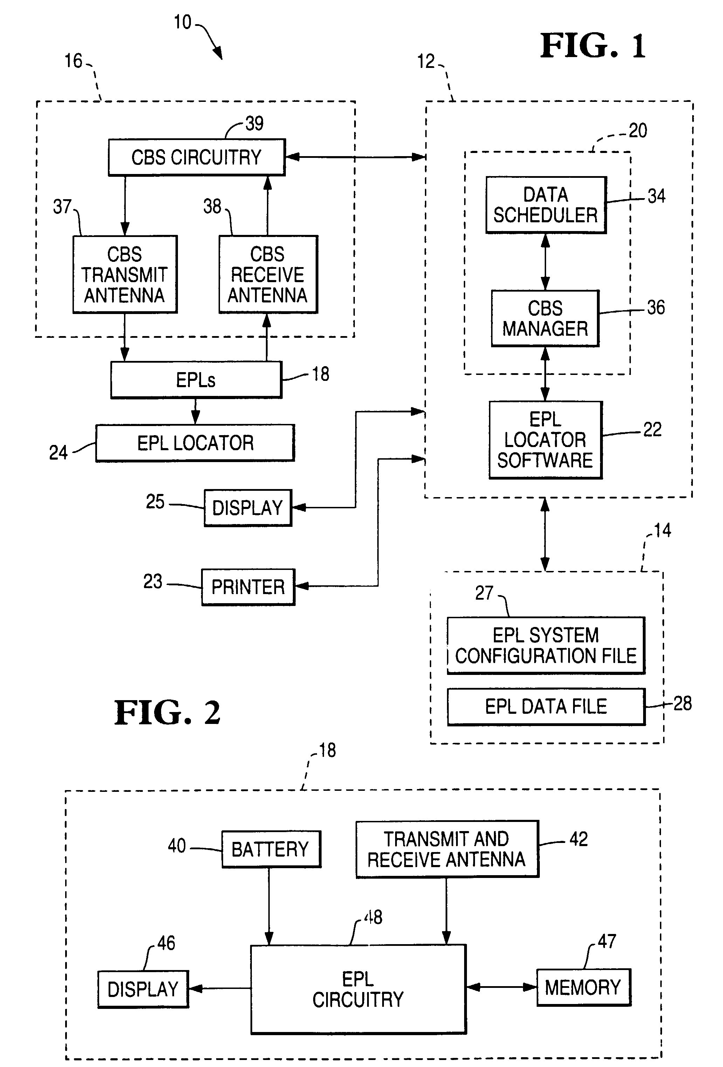

In Fig. 1, EPL system 10 includes computer 12, storage medium 14, communication base station (CBS) 16, electronic price labels (EPLs) 18, and portable EPL locator 24.

Computer 12 executes EPL control software 20 and EPL locator software 22. EPL control software 20 records, schedules, and transmits all messages to EPLs through CBS 16, and receives and analyzes status messages from EPLs 18 through CBS 16. EPL control software 20 also maintains and uses EPL data file 28, which contains item information, EPL identification information, item price verifier information, and status information for each of EPLs 18.

EPL control software 20 primarily includes data scheduler 34 and CBS manager 36. Data scheduler 34 schedules EPL price change messages to be sent to EPLs 18 through CBS 16.

EPL locator software 22 automatically monitors EPL system 10 for received signal strength and determines the location of identified EPLs, which it stores in EPL system configuration file 27. EPL system configuration file 27 tells computer 12 how system 10 is configured, i.e., the addresses of EPL system components and their location within a transaction establishment relative to other components within system 10, and the location of different types-of goods in system 10. EPL locator software 22 displays or prints location results on display 25 and printer 23.

Storage medium 14 is preferably a fixed disk drive. Storage medium 14 stores EPL system configuration file 27 and EPL data file 28.

CBS 16 preferably includes one transmit antenna 37 and up to four receive antennas 38 for transmitting and receiving messages between CBS 16 and EPLs 18. CBS 16 includes CBS circuitry 39 which controls operation of CBS 16. EPL system 10 preferably includes a plurality of CBSs 16 connected together in series.

CBS manager 36 schedules transmission of price change messages to EPLs 18 and the reception of status messages from EPLs 18 for predetermined time slots.

Turning now to Fig. 2, EPLs 18 are illustrated.

EPLs 18 each include battery 40, transmit and receive antenna 42, display 46, memory 47, and EPL circuitry 48.

Battery 40 provides power to EPLs 18.

Transmit and receive antenna 42 receives price change and status messages from CBS 16.

Transmit and receive antenna 42 transmits responses to price change and status messages to CBS 16.

Display 46 displays price and possibly additional information. Display 46 is preferably a liquid crystal display (LCD).

Memory 47 stores price verifier information, EPL type information, and may additionally store promotional information. Preferably, the price verifier information is a checksum of the displayed price.

EPL circuitry 48 controls the internal operation of EPLs 18.

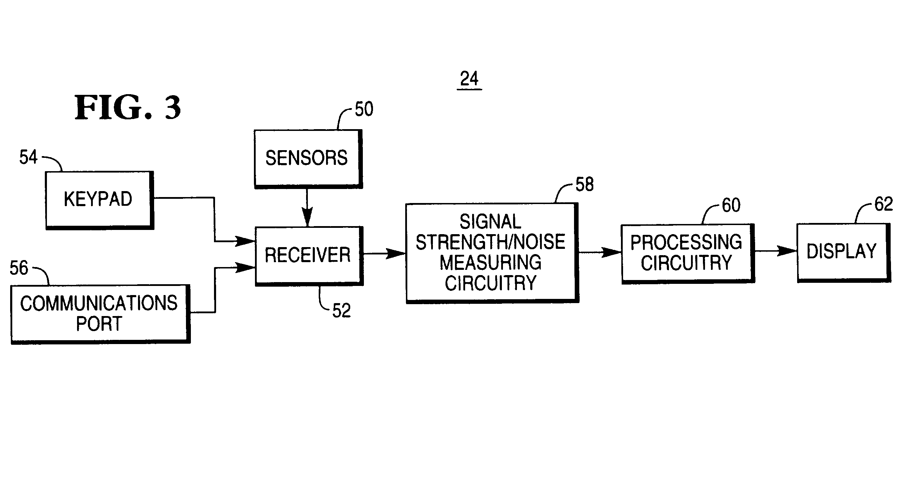

Turning now to Fig. 3, portable EPL locator 24 will initially be described generally; it includes sensors 50, (only one illustrated in this Figure) receiver 52, keypad 54, communications port 56, signal strength and noise measuring circuitry 58, processing circuitry 60, and display 62.

Sensors 50 include antennas for RF systems, or photodetectors for IR systems. Receiver 52 receives signals from EPLs 18 through sensors 50. Keypad 54 records entry of EPL identification numbers by an operator.

Alternatively, EPL identification information and optional approximate EPL fix information determined by EPL locator software 22 may be obtained by coupling communications port 56 to computer 12.

Signal strength measuring circuitry 58 determines the signal strength ratios for signals received through each of sensors 50. Signal-to-noise ratios may be used.

Processing circuitry 60 determines a direction to EPL 18 from the signal strength ratios, using triangulation techniques.

Display 62 displays direction information, EPL identification information, and approximate fix information.

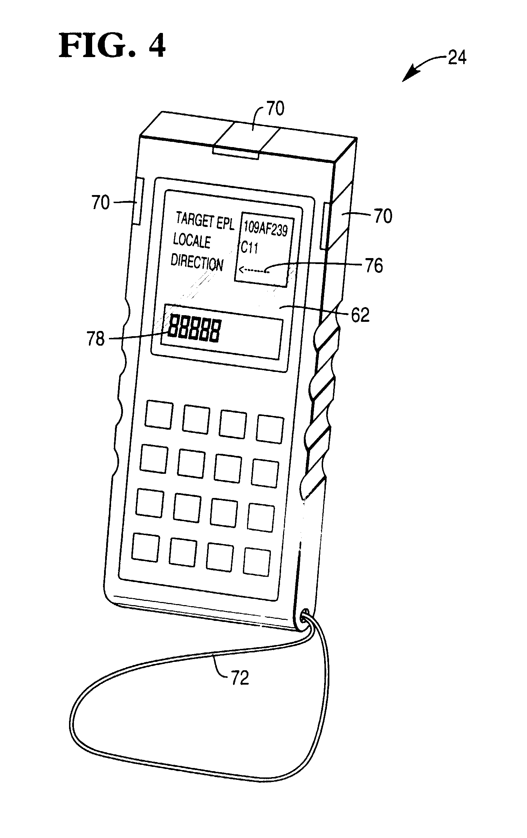

Turning now to Fig. 4, a first embodiment of EPL locator 24 is illustrated in more detail.

Here, EPL locator 24 is generally rectangular in shape and includes three spaced RF antennae 70 for receiving RF acknowledgment signals sent by EPLs 18 to CBS 16. To obtain optimal fix information, antennae 70 are preferably located on three different sides of EPL locator 24. The spacing allows the three antennae to receive signals of different strengths, so an EPL can be located by triangulation, as described above. Since antennae 70 are small, they can be located inside the EPL locator 24. EPL locator 24 may also include a carrying strap 72.

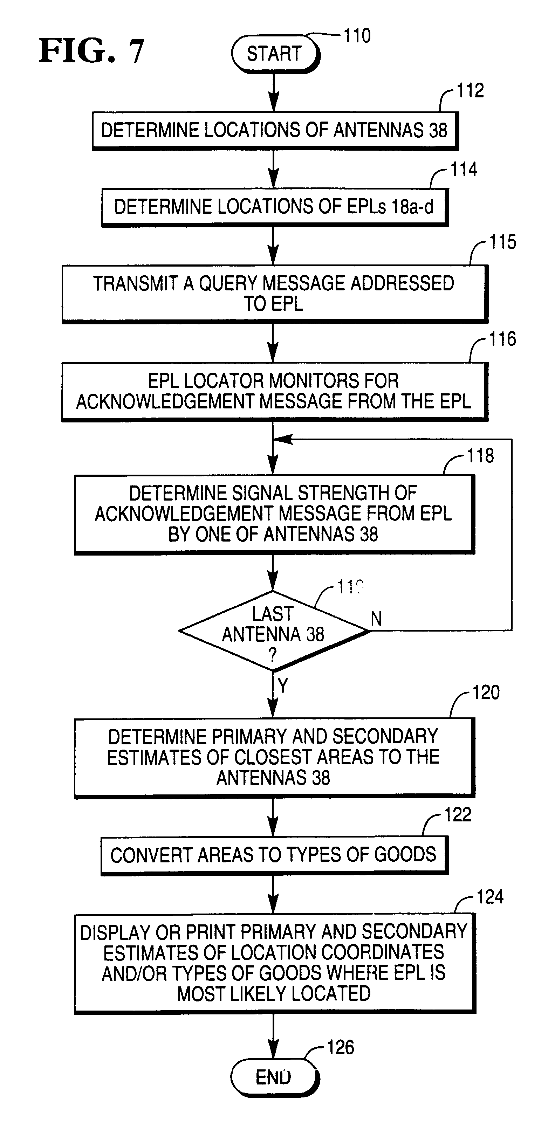

Display 62 displays information about a particular EPL, which may include a serial or other identification number entered into EPL locator 24 by a user, an approximate location of the EPL entered into EPL locator 24 by the user, the signal strength 78 of the signal from the EPL, and an arrow 76 pointing to the direction in which an operator of the hand-held locator 24 must move to be close to the required EPL. If the operator walks left and overshoots the location, the arrow reverses direction. Thus by changing the direction in which the locator is pointed, the operator can define a small area in which the EPL lies. The approximate location of the EPL is preferably determined by the EPL locator software 22 in accordance with the method of Figure 7.

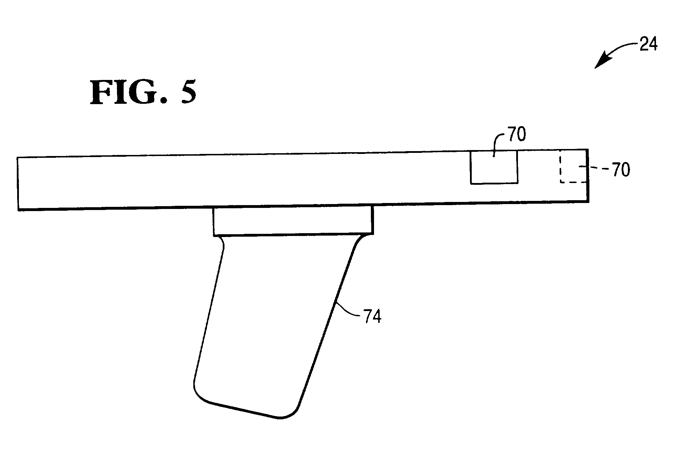

In Fig. 5, a second embodiment of EPL locator 24 is illustrated in more detail.

This embodiment is also preferably portable. Here, EPL locator 24 includes a gun-like handle 74, but is otherwise similar to the first embodiment.

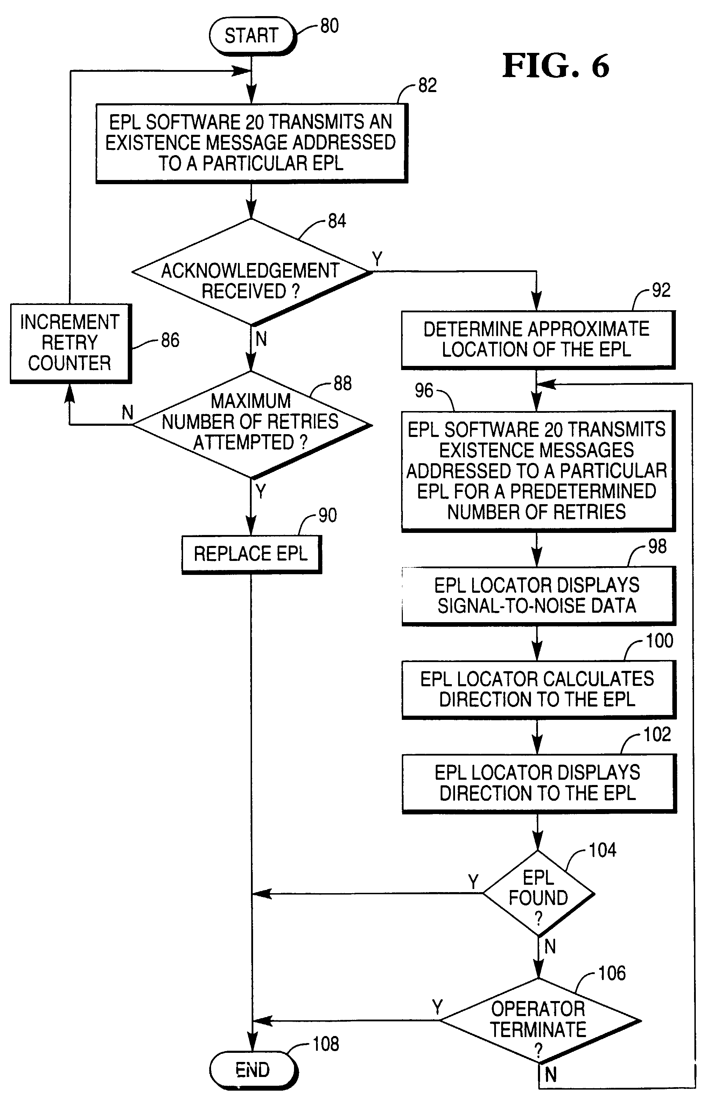

Turning now to Fig. 6, the operation of portable EPL locator 24 in conjunction with EPL control software 20 is explained in more detail, beginning with START 80.

In steps 82-90, EPL control software 20 determines whether a particular EPL 18 is out of the store or not functioning.

In step 82, EPL control software 20 transmits an existence message addressed to EPL 18.

In step 84, EPL control software 20 waits for an acknowledgment message from EPL 18.

If an acknowledgment message is not received, EPL control software 20 determines whether the maximum number of existence message transmission retries has been attempted in step 88.

If the maximum number of existence message retries has not been reached, EPL control software 20 increments a retry counter in step 86 and returns to step 82.

If the maximum number of existence message retries has been reached, EPL control software 20 stops transmitting existence messages and provides an indication to an operator to replace EPL 18 in step 90, since EPL 18 is either not operating or outside the range (i.e., outside of the transaction establishment) of CBS 16. The method ends in step 108.

Returning to step 84, if an acknowledgment is received from EPL 18, the method proceeds to step 92. In step 92, EPL locator software 22 obtains an approximate location of EPL 18 in accordance with the steps illustrated in Fig. 7(see below).

Steps 96-106 reflect the operation of hand-held EPL locator 24 in conjunction with EPL control software 20. The present invention envisions that such steps may be performed independently of steps 80-92 and when a rough estimate of the location of EPL 18 is not desired from EPL locator software 22 by an operator.

In step 96, EPL software 20 transmits existence or "request acknowledgment" messages addressed to a particular EPL 18 for a predetermined number of retries.

In step 98, EPL locator 24 displays signal strength data for the acknowledgment signals transmitted by EPL 18, and received by the three antennae 70.

In step 100, EPL locator 24 calculates a direction to EPL 18 using triangulation methods to determine the location of EPL 18.

In step 102, EPL locator 24 displays a direction arrow to EPL 18, as illustrated in Fig. 4.

In step 104, if an operator has found the displaced EPL 18, the method ends in step 108. The operator may then reinstall and reactivate the displaced EPL 18.

If the operator has not yet found EPL 18, the method continues to step 106, in which the operator may choose to discontinue the search. If the operator chooses to discontinue the search, the method ends in step 108. If the operator chooses to continue the search, the method returns to step 96 to allow the operator to home in on the displaced EPL 18.

Turning now to Fig. 7, the operation of EPL locator software 22 represented by step 92 of Fig. 6 is explained in more detail, beginning with START 110.

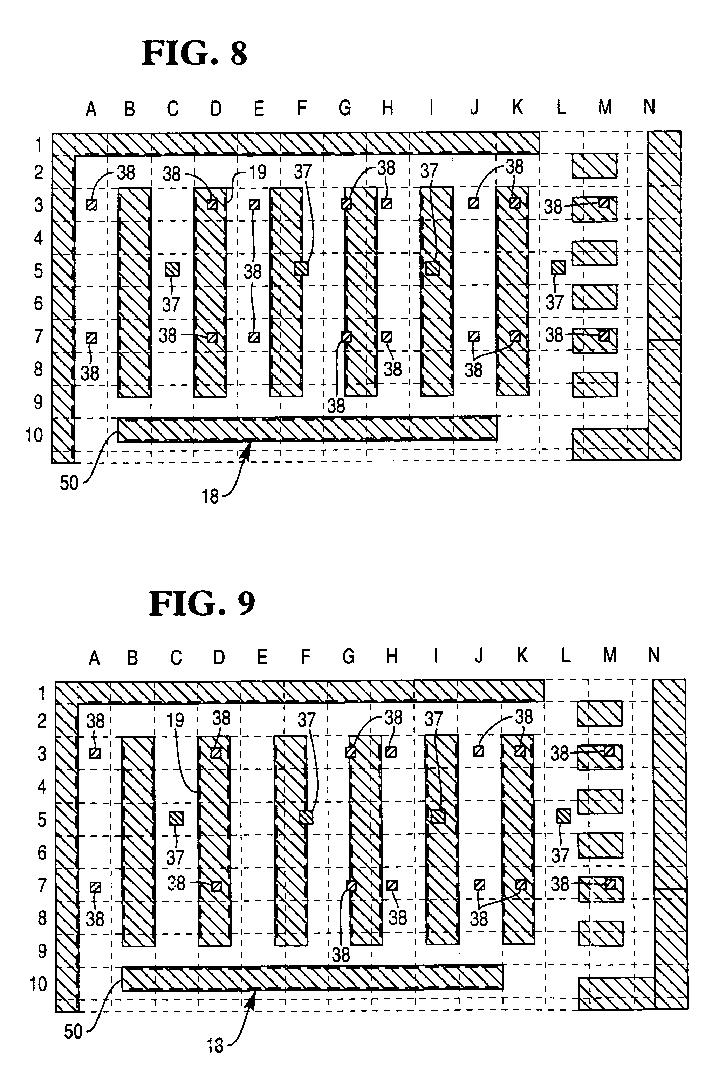

In step 112, the locations of antennas 38 are entered. As an optional step, the locations of CBSs 16 may be plotted on the map of Fig. 8, but are also included in configuration file 27 at installation time. Step 112 therefore need not be performed for every EPL location, the positions of the antennas 38 and CBSs 16 are known as they are installed.

In step 114, the locations of correctly located EPLs 18 are entered. As an optional step, the locations of correctly located EPLs 18 may be plotted on the map of Fig. 8. This information is available in EPL configuration file 27, but is not reliable in a running system since changes occur often. Step 114 therefore needs to be performed at intervals, but not necessarily for every use of the hand-held locator.

In step 115, EPL control software causes CBSs 16 to transmit a query or "please acknowledge" message to a particular EPL; this may be an EPL in its correct position, or a misplaced EPL, to be located.

In step 116, EPL locator software 22 listens for an acknowledgment message from the addressed EPL.

In step 118, EPL locator software 22 determines the signal strengths of any acknowledgment message from the addressed EPL 18 to one of antennas 38 within CBSs 16. If multiple antennas 38 receive the acknowledgment message, EPL locator software 22 uses triangulation methods based on received signal strengths to determine the location of the EPL.

In step 119, EPL locator software 22 determines whether signal strength information for the last of antennas 38 has been determined. If all CBSs 16 have been polled for signal strength information about their antennas 38, the method continues to step 120. If a CBS has not been polled, the method returns to step 118.

In step 120, EPL locator software 22 determines the primary and secondary estimates of fixes to the antennas 38 on the map in Fig. 8; this procedure will be described below.

In step 122, EPL locator software 22 optionally converts the fixes to types of goods using information in EPL configuration file 27.

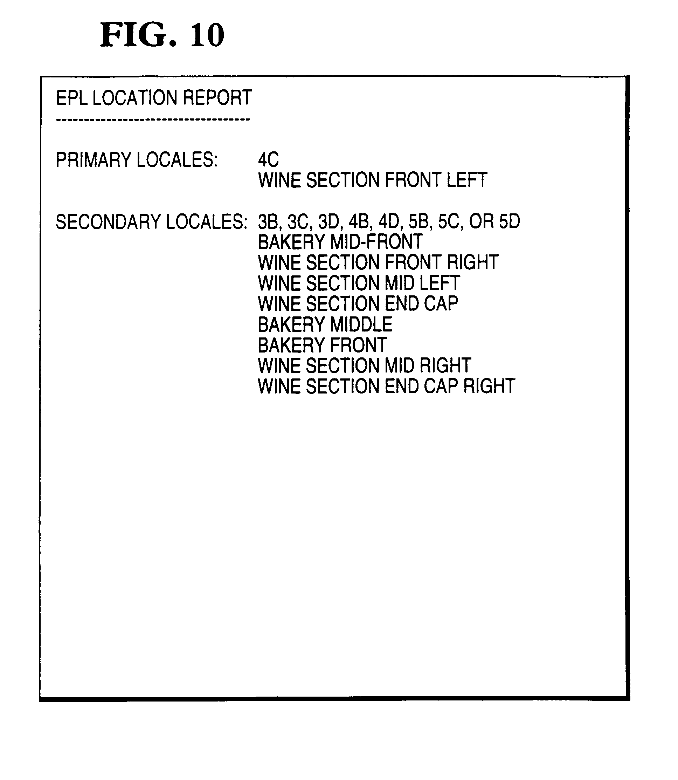

In step 124, EPL locator software 22 displays or prints primary and secondary estimates of the location coordinates and/or types of goods where the desired EPL is most likely located. A sample report is shown in Fig. 10.

If store personnel determine that the location of the EPL does not correspond to its location in EPL configuration file 27 (e.g., because a child has removed it and placed it somewhere else), they can place the EPL in its proper location.

In step 126, the method ends.

Turning now to Fig. 8, a map of a transaction establishment illustrates the location of shelves 50 (shown shaded) and EPLs 18.

The locations of EPLs 18 are referenced to a two-dimensional coordinate system in which rows are identified by numerals and columns are identified by letters.

There are four transmit antennas 37, located respectively at positions 5C, 5F, 5I and 5L. Each antenna is surrounded by four receive antennas 38; for example the transmit antenna of at 5C is surrounded by receive antennas 38 at locations 3A, 3D, 7D, 7A and the transmit antenna at 5F is surrounded by receive antennas 38 at locations 3E, 3G, 7G and 7E. The four receive antennas are at the corners of a rectangle with the associated transmit antenna approximately in its centre; the rectangles associated with each transmit/receive system do not overlap.

Conveniently, the antennas are installed in the ceiling space of the transaction establishments, and are cable-connected to the CBS awaiting 39 (see Fig.1).

In Figure 8, a misplaced EPL 19 to be located is illustrated at 3D, on the right hand side of the shelf block as viewed.

To locate the EPL 19, a message addressed to that EPL is transmitted by each transmit antenna 37 in turn and by each CBS 15 in turn. Suppose the only receive antenna 38 to detect an acknowledgment message from EPL 19 is the antenna located at position 3D. Thus 3D is a primary fix for the misplaced EPL.

If from the information in EPL configuration file 27 it is known that position 3D is 'at the back of the soft drinks aisle', then it is also known that an approximate location for EPL 19 is 'at the back of the soft drinks aisle', and an operator then visits that area and searches for the EPL 19 using the hand-held locator 24.

In this example, only one receive antenna 38 at position 3D hears the acknowledgment of EPL 19. The primary fix for EPL 19 is position 3D. A less accurate approximation for the fix for EPL 19 is any one of positions 2C, 2D, 2E, 3C, 3E, 4C, 4D, or 4E that surround the primary fix.

Turning now to Fig. 9, the misplaced EPL 19 is at position 4D, but on the opposite side of the shelf block 50 in comparison with Fig. 3, suppose now that three receive antennae 38 at positions 3D, 3A, and 7D hear the acknowledgment of EPL 19. Antenna 3D reports a relative signal strength of "60", and antennae 3A and 7A report relative signal strengths of "30". By calculation from the relative signal strengths, the primary approximation for the fix for EPL 19 is position 4C. (EPL locator software 22 operates in a similar way, using the signals from the three antennas 70). A secondary approximation for the fix for EPL 19 is any one of positions 3B, 3C, 3D, 4B, 4D, 5B, 5C, or 5D that surround the primary fix. Here, one of the secondary approximate fixes, 4D, is more accurate, but the 4C fix indicates which aisle 52 is relevant.

Thus the operator of the hand-held EPL locator 24 can identify the approximate area of the store in which the misplaced EPL 19 is now located by reference to the displayed goods, as in Figure 10, take the locator 24 to that area, and use the directional arrow 76 (Fig. 4) to locate the misplaced EPL 19 more accurately.

## Claims

1. A portable apparatus (24) for locating an electronic price label (18 or 19) characterized by:
a receiver (52) for receiving signals from the electronic price label;
signal strength determining circuitry (58) coupled to the receiver (52) for measuring the signal strengths associated with the received signals;
processing circuitry (60) coupled to the signal strength determining circuitry for determining from the signal strengths levels the direction to the electronic price label from the portable apparatus; and
a display (62) coupled to the processing circuitry for displaying the direction (76).

2. A portable apparatus according to claim 1, characterized by a plurality of spaced sensors (70) connected to the receiver (52), in which the signal strength determining circuitry (58) determines the strength of the signal received by each sensor (70), and in which the processing circuitry (60) determines said direction from the relative signal strengths.

3. A portable apparatus according to claim 2, characterized in that the processing circuitry (60) determines said direction by the method of triangulation.

4. A portable apparatus according to any preceding claim, characterized in that said display (62) indicates the direction (76) as to the right or to the left of the apparatus.

5. A portable apparatus according to any preceding claim, characterized by means (54 or 56) to enter information identifying said label.

6. A portable apparatus according to any preceding claim, characterized by means (54 or 56) to enter an approximate location of said label.

7. A method locating an electronic price label characterized by the steps of:
recording in a portable apparatus (24) identification information to identify said label;
receiving (96) signals from said label;
determining (98) the relative strengths of the received signals;
determining (100) from said relative strengths the direction of said label from the portable apparatus; and
displaying (102) said direction.
